(19) Europäisches Patentamt
European Patent Office
Office européen des brevets

(11) EP 3 532 448 B1

(12) EUROPEAN PATENT SPECIFICATION

(45) Date of publication and mention of the grant of the patent:
**27.01.2021 Bulletin 2021/04**

(21) Application number: **17794918.7**

(22) Date of filing: **23.10.2017**

(51) Int Cl.:
***C04B 28/02*** (2006.01) ***C04B 28/04*** (2006.01)
***C04B 28/06*** (2006.01) ***C04B 40/00*** (2006.01)

(86) International application number:
**PCT/EP2017/076943**

(87) International publication number:
**WO 2018/077772 (03.05.2018 Gazette 2018/18)**

# (54) ADDITIVE FOR CONSTRUCTION CHEMICAL COMPOSITIONS

ADDITIV FÜR BAUCHEMISCHE ZUSAMMENSETZUNGEN

ADDITIF POUR COMPOSITIONS CHIMIQUES DE CONSTRUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2016 EP 16196609**

(43) Date of publication of application:
**04.09.2019 Bulletin 2019/36**

(73) Proprietor: **BASF SE**
**67056 Ludwigshafen am Rhein (DE)**

(72) Inventors:
- **GAEDT, Torben**
  **83308 Trostberg (DE)**
- **DENGLER, Joachim**
  **83308 Trostberg (DE)**
- **MAZANEC, Oliver**
  **83308 Trostberg (DE)**
- **HESSE, Christoph**
  **83308 Trostberg (DE)**
- **SEUFERT, Sebastian**
  **83308 Trostberg (DE)**
- **SCHINABECK, Michael**
  **83308 Trostberg (DE)**

(74) Representative: **BASF IP Association**
**BASF SE**
**G-FLP-C006**
**67056 Ludwigshafen (DE)**

(56) References cited:
**WO-A1-00/44487**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention concerns an additive for construction chemical compositions, in particular mortar and cement compositions, the construction chemical compositions containing the additive and the use of the additive.

It is known that dispersants are added to aqueous slurries or pulverulent inorganic or organic substances, such as clays, silicate powder, chalk, carbon black, crushed rock and hydraulic binders, for improving their processibility, i.e. kneadability, spreadability, sprayability, pumpability or flowability. Such admixtures are capable of preventing the formation of solid agglomerates and of dispersing the particles already present and those newly formed by hydration and in this way improving the workability. This effect is utilized in particular in a targeted manner in the preparation of building material mixtures which contain hydraulic binders, such as cement, lime, gypsum, hemihydrate or anhydrite.

In order to convert these building material mixtures based on said binders, into a ready-to-use, processible form, as a rule substantially more mixing water is required than would be necessary for the subsequent hydration or hardening process. The proportion of voids which is formed in the concrete body by the excess of water, subsequently evaporating water leads to significantly poorer mechanical strengths and resistance.

In order to reduce said excess proportion of water at a predetermined processing consistency (workability) and/or to improve the workability at a predetermined water/binder ratio, admixtures are used which are generally referred to as water-reducing agents or plasticizers. In practice copolymers obtained by radical copolymerization (also known as polycarboxylate ethers (PCE)) are used as such agents.

Copolymers of this type are prepared by free-radical copolymerization of acid monomers (for example (meth)acrylic acid) with polyether macromonomers (for example polyalkylene glycol (meth)acrylates)and are described, for example, in EP 0753 488 A2. The properties of the polycarboxylate ethers depend significantly on factors such as acid monomer content and side chain length of the polyalkylene glycol structural units. It is possible by modification of the monomer content or the side chain length to produce either water reducers (sufficient initial slump is obtained, but slump-retention is usually not so good) or slump retainers (initial slump may be not sufficient, but slump-retention over time is satisfactory).

Ternary binder systems containing Ordinary Portland Cement (OPC), calcium aluminate cement and calcium sulfate based binders are frequently used, for example in self-levelling underlayments (SLU), and are described in "Lamberet S., 2004, Durability of ternary binder systems based on Portland Cement, calcium aluminate cement and calcium sulfate, These École polytechnique fédérale de Lausanne EPFL, n° 3151 (2005)" and "Zurbriggen, R.; Bühler, E.; Lang, J. (2006). Mixed-binder based self-levelling flooring compounds: Critical formulations - the reason for typical damages. 16. Ibausil Weimar".

Binary binder systems, which contain Ordinary Portland Cement (OPC) and calcium sulfate based binders are for example described in the US patent 5,685,903 in applications for floor underlayments, floor and road patching materials and fiberboards. The construction materials contain from about 20 weight % to about 75 weight % calcium sulfate beta-hemihydrate, about 10 weight % to about 50 weight % of a cement, silica fume, pozzolanic aggregate and as a retarder a natural protein-based material.

US patent 4,661,159 discloses cementitious floor underlayments including beta gypsum (45 to 55 weight %), alpha gypsum (20 to 30 weight %), Portland cement (about 20 weight %) and fly ash (about 5 weight %), in each case the weight percentages are given as values referring to the total dry weight of the composition. As retarder sodium citrate is disclosed. The compositions are said to be quick-setting, non-combustible, non-water-permeable and easy to work.

US patent 7,338,990 B2 discloses a mixture for preparing a slurry that hydrates to form an exterior gypsum cement, comprising 30 to 70 weight % hydraulic cement, 30 to 70 weight % calcined gypsum and 0.05 to 2.5 weight % polycarboxylate dispersant, wherein the dispersant is based on oxyalkyleneglycol-alkyl ethers and unsaturated dicarboxylic acid derivatives. The mixtures allow improved production of molded articles due to the decreased expansion of the casted material and at the same time improved mechanical strength.

WO 00/23395 discloses a process for preparing a permeable aerated mortar by mixing a motar material containing a rapidly hardening cement with a foam. The material may contain a conventional set retarder such as citric acid, gluconic acid, tartaric acid, malic acid, and salts thereof, sodium carbonate, potassium carbonate or sodium bicarbonate.

WO 00/44487 discloses compounds comprising a residue of a sugar or sugar derivative linked by an amine, amide, imide or urea group to a non-sugar substituent and their use for modifying the properties of cement and cementitious compositions such as fluidity, strength, grinding efficiency, and set retardation.

WO 01/04185 discloses cementitious formulations comprising a cement and an oligomeric dispersant which comprises a moiety derived from a polyhydroxy compound such as sugars, sugar acids, lactones of sugar acids etc.

Dry mortars of the prior art based on calciumsulfate hemihydrate, anhydrite or aluminate-containing cements often have the disadvantage that they are not satisfying in relation to flowability and development of compressive strength and final strength. Depending on the inorganic binder used a rapidly occurring gypsum formation (in case of calciumsulfate hemihydrate or anhydrite as inorganic binder) or a fast aluminate reaction (in case of aluminate-containing cement) results in a significantly reduced open time of the mortar and, hence, unacceptable processability. Consequently, retarders

for the hydration of the anhydrous phases of the inorganic binder have to be added. Retarders according to prior art have the disadvantage that an improved workability of the mortar which is influenced by the dosage of the retarder, is connected with a reduced strength development within 1-2 days.

The problem underlying the invention was therefore to provide a construction chemical composition (building material formulation) which solves the problems of the prior art. In particular, the compositions should show an improved slump retention (reduced slump loss). Furthermore, the temperature dependency of the fluidity should be reduced. In addition, the composition should not impair the mechanical properties such as the compressive strength, in particular the compressive strength after 24 h, i.e. it should be at least comparable to that one achieved with conventional retarders.

This problem is solved by providing an additive for construction chemical compositions comprising at least one amide or ester of a sugar acid and at least one water-soluble comb polymer which contains, on the main chain, acid functions and side chains having ether functions. The additive is useful for retarding the hardening of a construction chemical composition.

Embodiments of the invention are defined in the claims.

**The additive**

Component (a): The amide or ester of a sugar acid

Suitable amides and esters are, for example, known from WO 00/44487 and WO 01/04185. Preferred are esters and amides of gluconic acid. They can be prepared by reacting a sugar lactone with a suitable amine or alcohol in a conventional manner. Alternatively, a sugar acid may be esterified with a suitable alcohol or amidated with a suitable amine. In the preferred amides and esters $R^4$ is $-(AO)_x-R^5$ with A being ethylene ($-CH_2CH_2-$) and/or $-CH(CH_3)-CH_2-$. x is preferably 1 to 80, in particular 1 to 60.

Component (b): The water-soluble comb polymer

"Water-soluble comb polymer" as used herein means a polymer comprising a polymer backbone comprising units with acid functions (anionic and/or anionogenic groups), in particular carboxylic acid groups, and units carrying a side chain having ether functions. Such units are defined in detail in the embodiments given above.

The comb polymers are more preferably selected from the group of polycarboxylate ethers (PCEs), the anionic group being in the case of PCEs carboxylic groups and/or carboxylate groups. The comb polymers as used herein and their preparation are known, for example from WO 2010/026155. They are preferably produced by a radical copolymerization of a polyether macromonomer and an acid monomer in a way that at least 45 mol-%, preferably at least 80 mol-% of all structural units of the copolymer were formed by copolymerization of the polyether macromonomer and the acid monomer. The term acid monomer means in particular a monomer comprising anionic and/or anionogenic groups. The term polyether macromonomer means in particular a monomer comprising at least two ether groups, preferably at least two alkylene glycol groups.

The amount of acid functions in the polymer is such that the charge density is in the range from 1 meq/g -5 meq/g polymer, preferably 1 meq/g -3 meq/g polymer. Charge density of the polymer was calculated assuming that all acid groups (sulfonate, phosphate and Carboxylate) are fully deprotonated. Charge density $\rho$ is calculated with $\rho = \frac{N(neg.charges)}{m}$ (N = number of negative charges; m = total mass of polymer).

"Water-soluble" means a polymer having a solubility in water at 20°C and normal pressure of at least 1 g/l, in particular at least 10 g/l and preferably at least 100 g/l.

The weight ratio of component (a) (amide or ester of a sugar acid) to component (b) (water-soluble comb polymer) is in the range from 10:1 to 1:5.

**Construction chemical compositions**

The present invention further relates to construction chemical compositions which comprise the additive of the invention and at least one inorganic binder.

In an embodiment, the additive is contained in the construction chemical compositions in an amount of 0.01 to 5 % by weight, based on the weight of the inorganic binder.

In another embodiment, the inorganic binder is selected from a latent hydraulic binder, a hydraulic binder or a calcium sulfate-based binder or mixtures thereof.

In an embodiment, the inorganic binder is selected from calciumsulfate hemihydrate, anhydrite and/or aluminate-containing cement.

Aluminate-containing cement here means that the cement contains aluminate phases such as tricalcium alu-

minate ($C_3A$), monocalcium aluminate (CA), tetra aluminate ferrate ($C_4AF$), dodecacalcium heptaaluminate ($C_{12}A_7$), yeelimite ($C_4A_3s$) etc. The amount of aluminate phases is ≥ 0.1 % by weight of the aluminate-containing cement. The content of $Al_2O_3$ in the aluminate-containing cement is ≥ 0.05 % by weight of the aluminate-containing cement.

In another embodiment, the aluminate-containing cement is selected from CEM cement and aluminate cement, in particular high alumina cement and sulfoaluminate cement, and mixtures thereof. CEM cement is a cement in accordance with the CEM classification as set forth for example in DIN EN 197-1. A preferred cement is ordinary Portland cement (OPC) according to DIN EN 197-1 which may either contain calcium sulfate (<7% by weight) or is essentially free of calcium sulfate (<1% by weight). Another preferred cement is sulfoaluminate cement (calcium sulfoaluminate cement, CSA) or high alumina cement (HAC) according to DIN EN 14647 or a mixture of ordinary Portland cement and aluminate cement, in particular a mixture of ordinary Portland cement and high alumina cement or a mixture of ordinary Portland cement and sulfoaluminate cement or a mixture of ordinary Portland cement, high alumina cement and sulfoaluminate cement.

It has been surprisingly found that the additive according to formula (I) is useful as retarder for the hydration of anhydrous inorganic binders resulting in the formation of hydrate phases connected with the hardening of the inorganic binders. In the case of calcium sulfate hemihydrate and anhydrite the formation of gypsum is influenced by the additive of the invention. In the case of aluminate-containing cements the additive is influencing the aluminate reaction. Aluminate reaction means the hydration of aluminate-containing clinker phases like for example tricalcium aluminate ($C_3A$), monocalcium aluminate (CA), tetra aluminate ferrate ($C_4AF$), dodecacalcium heptaaluminate ($C_{12}A_7$), yeelimite ($C_4A_3s$) under formation of calcium aluminate hydrates. The hydration reactions are described in Lea's Chemistry of Cement and Concrete (4th edition), 2007 on pages 241-274 (hydration of Portland cement) and 722-735 (hydration of calcium aluminate cement). The hydration reaction of aluminate-containing clinker phases is retarded which is required to avoid a too rapid setting of mortar and concrete pastes and to ensure a sufficient open time which allows processing the pastes as desired.

In a further embodiment, the inorganic binder is a calcium sulfate-based binder. In a further embodiment, the calcium sulfate based binder is selected from the group consisting of anhydrite, α- and β-hemihydrate, i.e. α-bassanite and β-bassanite, or mixtures thereof. Preferably the calcium sulfate-based binder is α-bassanite and/or β-bassanite.

In an embodiment, where the construction chemical compositions contain an aluminate-containing cement, the compositions may additionally contain at least one calcium sulfate which is selected from the group consisting of calcium sulfate dihydrate, anhydrite, α- and β-hemihydrate, i.e. α-bassanite and β-bassanite, or mixtures thereof. Preferably the calcium sulfate is α-bassanite, β-bassanite and/or anhydrite. In general, calcium sulfate is comprised in an amount of about 1 to about 20 wt%, based on the weight of the aluminate-containing cement.

In an embodiment, the construction chemical compositions additionally contain at least one alkali metal sulfate like potassium sulfate or sodium sulfate, in particular in case the inorganic binder is calcium sulfate hemihydrate like α- and β-hemihydrate or anhydrite.

In a further embodiment, the inorganic binder comprises a mixture of at least one aluminate-containing cement and at least one calcium sulfate-based binder.

In another embodiment, the construction chemical compositions additionally contain at least one alkali metal carbonate, in particular sodium and/or potassium carbonate. The alkali metal carbonate is, in general, comprised in an amount in the range from about 1 to about 20 wt%, based on the weight of the inorganic binder.

The construction chemical compositions may also contain latent hydraulic binders. For the purposes of the present invention, a "latent hydraulic binder" is preferably a binder in which the molar ratio (CaO + MgO) : $SiO_2$ is from 0.8 to 2.5 and particularly from 1.0 to 2.0. In general terms, the above-mentioned latent hydraulic binders can be selected from industrial and/or synthetic slag, in particular from blast furnace slag, electrothermal phosphorous slag, steel slag and mixtures thereof, and the "pozzolanic binders" can generally be selected from amorphous silica, preferably precipitated silica, fumed silica and microsilica, ground glass, metakaolin, aluminosilicates, fly ash, preferably brown-coal fly ash and hard-coal fly ash, natural pozzolans such as tuff, trass and volcanic ash, natural and synthetic zeolites and mixtures thereof.

The slag can be either industrial slag, i.e. waste products from industrial processes, or else synthetic slag. The latter can be advantageous because industrial slag is not always available in consistent quantity and quality.

Blast furnace slag (BFS) is a waste product of the glass furnace process. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 $m^2\ kg^{-1}$, preferably from 300 to 500 $m^2\ kg^{-1}$. Finer milling gives higher reactivity.

For the purposes of the present invention, the expression "blast furnace slag" is however intended to comprise materials resulting from all of the levels of treatment, milling, and quality mentioned (i.e. BFS, GBFS and GGBFS). Blast furnace slag generally comprises from 30 to 45% by weight of CaO, about 4 to 17% by weight of MgO, about 30 to 45%

by weight of $SiO_2$ and about 5 to 15% by weight of $Al_2O_3$, typically about 40% by weight of CaO, about 10% by weight of MgO, about 35% by weight of $SiO_2$ and about 12% by weight of $Al_2O_3$.

Electrothermal phosphorous slag is a waste product of electrothermal phosphorous production. It is less reactive than blast furnace slag and comprises about 45 to 50% by weight of CaO, about 0.5 to 3% by weight of MgO, about 38 to 43% by weight of $SiO_2$, about 2 to 5% by weight of $Al_2O_3$ and about 0.2 to 3% by weight of $Fe_2O_3$, and also fluoride and phosphate. Steel slag is a waste product of various steel production processes with greatly varying composition.

Amorphous silica is preferably an X-ray-amorphous silica, i.e. a silica for which the powder diffraction method reveals no crystallinity. The content of $SiO_2$ in the amorphous silica of the invention is advantageously at least 80% by weight, preferably at least 90% by weight. Precipitated silica is obtained on an industrial scale by way of precipitating processes starting from water glass. Precipitated silica from some production processes is also called silica gel.

Fumed silica is produced via reaction of chlorosilanes, for example silicon tetrachloride, in a hydrogen/oxygen flame. Fumed silica is an amorphous $SiO_2$ powder of particle diameter from 5 to 50 nm with specific surface area of from 50 to 600 $m^2 g^{-1}$.

Microsilica is a by-product of silicon production or ferrosilicon production, and likewise consists mostly of amorphous $SiO_2$ powder. The particles have diameters of the order of magnitude of 0.1 μm. Specific surface area is of the order of magnitude of from 15 to 30 $m^2 g^{-1}$.

Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO.

Metakaolin is produced when kaolin is dehydrated. Whereas at from 100 to 200°C kaolin releases physically bound water, at from 500 to 800°C a dehydroxylation takes place, with collapse of the lattice structure and formation of metakaolin ($Al_2Si_2O_7$). Accordingly pure metakaolin comprises about 54% by weight of $SiO_2$ and about 46% by weight of $Al_2O_3$.

For the purposes of the present invention, aluminosilicates are the abovementioned reactive compounds based on $SiO_2$ in conjunction with $Al_2O_3$ which harden in an aqueous alkali environment. It is of course not essential here that silicon and aluminium are present in oxidic form, as is the case by way of example in $Al_2Si_2O_7$. However, for the purposes of quantitative chemical analysis of aluminosilicates it is usual to state the proportions of silicon and aluminium in oxidic form (i.e. as "$SiO_2$" and "$Al_2O_3$").

In an embodiment, the latent hydraulic binder is selected from the group consisting of blast furnace slag, microsilica, metakaolin, aluminosilicates, fly ash and mixtures thereof.

The latent hydraulic binder is, in general, comprised in an amount in the range from about 1 to about 30 wt%, based on the weight of the aluminate-containing cement.

In an embodiment, the construction chemical compositions additionally include conventional retarders, such as citric acid, tartaric acid, sodium gluconate, phosphates etc.

In another embodiment, the compositions comprise at least one hardening accelerator. A preferred hardening accelerator is a calcium-silicate-hydrate (CSH) based hardening accelerator for compositions comprising OPC.

The calcium-silicate-hydrate may contain foreign ions, such as magnesium and aluminium. The calcium-silicate-hydrate can be preferably described with regard to its composition by the following empirical formula:

a CaO, $SiO_2$, b $Al_2O_3$, c $H_2O$, d X, e W
X is an alkali metal
W is an alkaline earth metal

| | | |
|---|---|---|
| $0.1 \le a \le 2$ | preferably | $0.66 \le a \le 1.8$ |
| $0 \le b \le 1$ | preferably | $0 \le b \le 0.1$ |
| $1 \le c \le 6$ | preferably | $1 \le c \le 6.0$ |
| $0 \le d \le 1$ | preferably | $0 \le d \le 0.4$ or $0.2$ |
| $0 \le e \le 2$ | preferably | $0 \le e \le 0.1$ |

Calcium-silicate-hydrate can be obtained preferably by reaction of a calcium compound with a silicate compound, preferably in the presence of a polycarboxylate ether (PCE). Such products containing calcium-silicate-hydrate are for example described in WO 2010/026155 A1, EP 14198721, WO 2014/114784 or WO 2014/114782.

Preferable is a composition, preferably dry mortar composition, in which the calcium-silicate-hydrate based hardening accelerator for cementitious compositions is a powder product. Powder products are advantageous as they are naturally high in contents of calcium-silicate-hydrate. In particular there are no compatibility problems with for example cement or other hydraulic binders, which might react with water from the aqueous calcium-silicate-hydrate containing

suspension during storage.

The water content of the calcium-silicate-hydrate based hardening accelerator in powder form is preferably from 0.1 weight % to 5.5 weight % with respect to the total weight of the powder sample. Said water content is measured by putting a sample into a drying chamber at 80 °C until the weight of the sample becomes constant. The difference in weight of the sample before and after the drying treatment is the weight of water contained in the sample. The water content (%) is calculated as the weight of water contained in the sample divided with the weight of the sample.

A composition is preferred in which the calcium-silicate-hydrate based hardening accelerator is an aqueous suspension. The water content of the aqueous suspension is preferably from 10 weight % to 95 weight %, preferably from 40 weight % to 90 weight %, more preferably from 50 weight % to 85 weight %, in each case the percentage is given with respect to the total weight of the aqueous suspension sample. The water content is determined in an analogous way as described in the before standing text by use of a drying chamber.

Further useful hardening accelerators for aluminate-containing cements are calcium formate, calcium nitrate, calcium chloride, lithium carbonate and lithium sulfate.

Further useful hardening accelerators for inorganic binders selected from calciumsulfate hemihydrate and/or anhydrite are potassium sulfate, sodium sulfate and ground gypsum (known to the skilled person as ball mill accelerator).

Above mentioned hardening accelerators can be used as single accelerator or as mixture.

The construction chemical composition may additionally contain an essentially aluminate-free cement, anionic starch ethers, cellulose ethers, a redispersible polymer powder, and fillers or a mixture of two or more thereof. The term "essentially free" means here less than 5 wt%, preferably less than 3 wt% and in particular less than 1 wt%, based on the weight of the aluminate-containing cement.

An anionic starch ether is in particular carboxymethyl starch ether. Cellulose ethers are preferably selected from the group consisting of methylcellulose, ethylcellulose, propylcellulose, methylethylcellulose, hydroxyethylcellulose (HEC), hydroxypropylcellulose (HPC), hydroxyethylhydroxypropylcellulose, methylhydroxyethylcelluose (MHEC), methylhydroxypropylcelluose (MHPC) and propylhydroxypropylcellulose or mixtures of two or more thereof and in particular from the group consisting of carboxymethyl cellulose, methyl cellulose, methyl hydroxypropyl cellulose, methyl hydroxyethyl cellulose or mixtures of two or more thereof.

Redispersible polymer powders are preferably selected from the group consisting of vinyl acetate polymer, vinyl acetate-ethylene copolymer, vinyl acetate-vinyl ester copolymer and/or vinyl acetate-vinyl ester-ethylene copolymer, with the vinyl ester monomers in each case being selected from the group consisting of vinyl laurate, vinyl pivalate and vinyl versatates, vinyl acetate-acrylic ester copolymer, vinyl acetate-acrylic ester-ethylene copolymer, styrenebutadiene copolymer and styrene-acrylic ester copolymer, with the acrylic esters in each case being esters with branched or linear alcohols containing from 1 to 10 carbon atoms and in particular from the group consisting of styrene acrylate copolymer, polyvinyl acetate, styrene butadiene copolymer or mixtures of two or more thereof.

Fillers are preferably inert materials, which do not act as binder and basically do not dissolve in water. The solubility in water is preferably below 3 g/l at 20 °C and normal pressure. Preferred fillers are limestone, quartz flower, sand, silica dust and basalt powder. Fillers can be preferably present in the composition from 1 weight % to 80 weight %, preferably from 10 weight % to 80 weight %, more preferably 30 weight % to 70 weight % with respect to the total weight of the composition.

In an embodiment, the construction chemical composition is in form of a powder mixture.

In another embodiment, the invention relates to a construction chemical composition comprising

a) the additive of the invention as defined above, and
b) ordinary Portland cement.

The content of a) in this embodiment is 0.01 wt.-% - 5.0 wt.-% by weight of b).

In another embodiment, the invention relates to a construction chemical composition comprising

a) the additive of the invention as defined above, and
b) calcium sulfate hemihydrate or anhydrite.

The content of a) in this embodiment is 0.01 wt.-% - 5.0 wt.-% by weight of b).

In another embodiment, the invention relates to a construction chemical composition comprising

a) the additive of the invention as defined above,
b) ordinary Portland cement, or calcium sulfate, in particular calcium sulfate dihydrate, calcium sulfate hemihydrate or anhydrite and
c) aluminate cement, in particular high alumina cement and sulfoaluminate cement and mixtures thereof.

The content of a) in this embodiment is 0.01 wt.-% - 5.0 wt.-% by weight of sum of b) and c). The content of the sum of b) and c) in the construction chemical composition is 10 - 95 wt.-%. The weight ratio b) / c) is 5/95 to 95/5.

In another embodiment, the invention relates to a construction chemical composition comprising

a) the additive of the invention as defined above,
b) ordinary Portland cement,
c) aluminate cement, in particular high alumina cement and sulfoaluminate cement and mixtures thereof; and
d) calcium sulfate, in particular calcium sulfate dihydrate, calcium sulfate hemihydrate or anhydrite.

The content of a) in this embodiment is 0.01 wt.-% - 5.0 wt.-% by weight of sum of b), c), and d). The content of the sum of b), c), and d) in the construction chemical composition is 10 - 95 wt.-%. The weight ratio b) / c) is 5/95 to 95/5. The weight ratio c) / d) is 100/1 to 2/1.

The invention also concerns the use of the additive of the invention as a retarder for aluminate-containing building material formulations and/or for producing building products, in particular for concretes such as on-site concrete, finished concrete parts, pre-cast concrete parts, concrete goods, cast concrete stones, concrete bricks, in-situ concrete, sprayed concrete (shotcrete), ready-mix concrete, air-placed concrete, concrete repair systems, industrial cement flooring, one-component and two-component sealing slurries, screeds, filling and self-levelling compositions, such as joint fillers or self-levelling underlayments, adhesives, such as building or construction adhesives, thermal insulation composite system adhesives, tile adhesives, renders, plasters, sealants, coating and paint systems, in particular for tunnels, waste water drains, splash protection and condensate lines, screeds, mortars, such as dry mortars, sag resistant, flowable or self-levelling mortars, drainage mortars, or repair mortars, grouts, such as joint grouts, non shrink grouts, tile grouts, wind-mill grouts, anchor grouts, flowable or self-levelling grouts, ETICS (external thermal insulation composite systems), EIFS grouts (Exterior Insulation Finishing Systems), swelling explosives, waterproofing membranes, cementitious foams or gypsum wall boards.

The following examples illustrate the invention.

Any molecular weight given herein is the average molecular weight $M_w$ as determined by gel permeation chromatography (GPC). The molecular weights of the polymers were determined by using gel permeation chromatography (GPC) as described below.

Column combination: OH-Pak SB-G, OH-Pak SB 804 HQ and OH-Pak SB 802.5 HQ by Shodex, Japan; eluent: 80 vol.-% aqueous solution of $HCO_2NH_4$ (0.05 mol/l) and 20 vol.-% acetonitrile; injection volume 100 μl; flow rate 0.5 ml/min. The molecular weight calibration was performed with poly(ethylene oxide) standards for the RI detector. Standards were purchased from PSS Polymer Standards Service, Germany. To determine the molecular weight an RI detector was used.

Synthesis of component (a) (sugar derivatives)

Components (a) were synthesized by reacting gluconolactone (anchor group) as sugar acid precursor with the compound from which the amide or ester group is derived (sugar side chain). For comparative purposes conventional retarders (citric acid, tartaric acid and succinic acid anhydride) were used as anchor group and were reacted with said compound. A glass flask is charged with 1 mol-equivalent of the sugar side chain and 1 mol-equivalent of the anchor group under nitrogen. The educt mixture is heated to 130 °C and stirred at this temperature for four hours. Thereafter, the mixture is diluted with water and the degree of conversion is determined using HPLC. The educts are given in table 1 below.

Table 1

| Sugar derivative | Side chain | Anchor group |
|---|---|---|
| 1 | Jeffamin M1000 | Gluconolactone |
| 2 | Jeffamin M 2070 | Gluconolactone |
| 3 | MPEG 2000-*i*-BO | Gluconolactone |
| 4 | Diethanolamine | Gluconolactone |
| 5 | MPEG-500-PO | Gluconolactone |
| 6 | Genamin M 41/2000 | Gluconolactone |
| 7 | Jeffamin D 400 | Gluconolactone |

(continued)

| Sugar derivative | Side chain | Anchor group |
|---|---|---|
| 8 | Jeffamin M 600 | Gluconolactone |
| V1 | Jeffamin M1000 | Citric acid |
| V2 | Jeffamin M1000 | Succinic acid anhydride |

Jeffamin M1000:

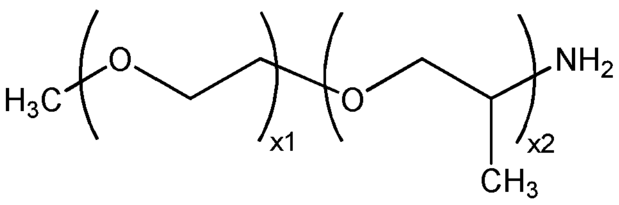

x1:x2 = 19:3; $M_W$ ~ 1000

Jeffamine M2070:

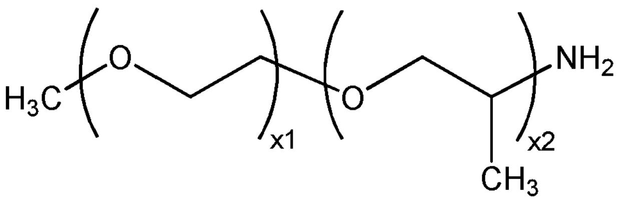

x1:x2 = 31:10; $M_W$ ~ 2000

Jeffamine M600:

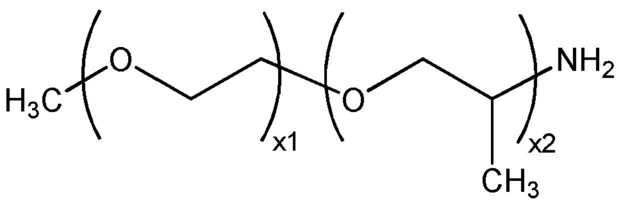

x1:x2 = 1:9; $M_W$ ~ 600

Jeffamine D400:

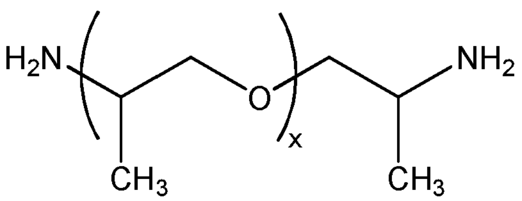

x = 6.1; $M_W$ ~ 430

Genamine M 41/2000:

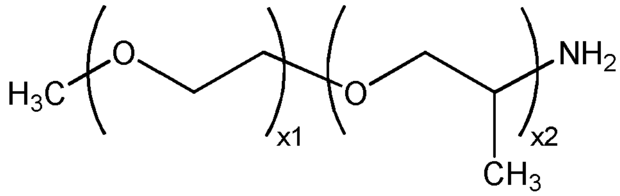

$x1:x2 = 4:1; M_W \sim 2000$

MPEG-500-PO:

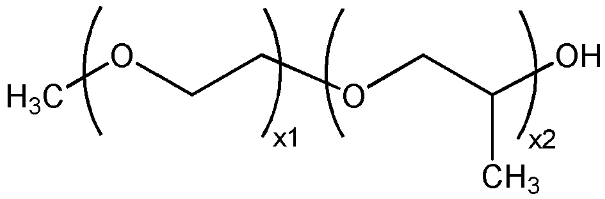

$x1:x2 = 4:1; M_W \sim 500$

MPEG 2000-i-BO:

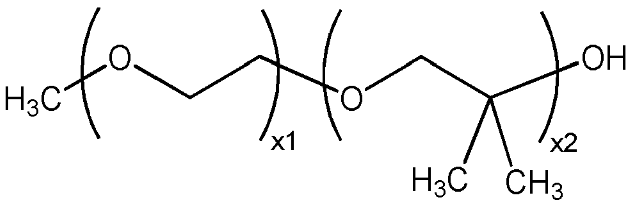

$x1:x2 = 45:1; M_W \sim 2000$

Application examples

The additives were tested in cement mortar using the following polymers as water-soluble comb polymer:

Polymer 1: A polymer from radical polymerization of ethoxylated hydroxybutyl monovinylether with 67 EO and 10 equivalents of acrylic acid per ethoxylated side chain.
Polymer 2: A phosphate-based polyether (example 2, WO15091461A1).
Polymer 3: Melamine-Sulfonate-Formaldehyde resin (Melment F10).
Polymer 4: Naphthalene sulfonic acid - formaldehyde condensation product (Melcret 500 L).
Polymer 5: A polymer from radical polymerization of ethoxylated hydroxybutyl monovinylether with 67 EO and 5 equivalents of acrylic acid per ethoxylated side chain.

Polymers 3 and 4 are comparative polymers.

The cement mortar contained 50.0 wt% of Portland cement (CEM I 52,5 N, Milke) und 50.0 wt% norm sand (DIN EN 196-1). The water/cement weight ratio was 0.30. The water-soluble comb polymer and the sugar derivatives of table 1 were added to the mortar in the amounts given in table 2.

The cement mortar was prepared on the basis of the method described in DIN EN 196-1:2005 in a 5L RILEM mixer. The mixer was charged with water, additive and then cement. Thereafter, mixing was started at low speed (140 rpm). After 30 s norm sand was uniformly added to the mixture within 30 s. The mixing speed was then increased (285 rpm) and continued for 30 s. The mixing was then stopped for 90s and thereafter continued for 60 s at 285 rpm. The total mixing time was 4 min.

Immediately after the mixing process the slump flow of the samples was determined using the Haegermann

conus without applying compression energy. The testing method was on the basis of SVB-Richtlinie des Deutschen Ausschusses für Stahlbeton (Deutscher Ausschuss für Stahlbetonbau (Ed.): DAfStb - Richtlinie Selbstverdichtender Beton (SVB-Richtlinie) Berlin, 2003). The Haegermann conus (d at the top = 70 mm, d at the bottom = 100 mm, h = 60 mm) was placed in the middle of a dry glass plate having a diameter of 400 mm and filled with the cement mortar. 5 min. after the first contact between cement and water the conus was removed and the average diameter of the cake formed was determined. In order to follow the development of slump flow the test was repeated after the mortar was allowed to stand for 10, 30 and 60 min. Prior to each test the mortar was remixed for 10 s at 140 rpm. The results are given in tables 2 to 4 (bwoc: by weight of cement).

Table 2

| **Sugar derivative** | **Polymer 1** | **Amount of Sugar derivative** | **Slump flow SF [cm]** | | | | **delta SF** |
|---|---|---|---|---|---|---|---|
| | | | 5 | 10 | 30 | 60 | |
| | [% bwoc] | [% bwoc] | min | min | min | min. | [cm] |
| | | | | | | | |
| 1 | 0 | 0,05 | - | - | - | - | - |
| - | 0,216 | 0 | 27,3 | 19,7 | 12,3 | 12,1 | 15,2 |
| 1 | 0,182 | 0,05 | 26,7 | 21,7 | 19,9 | 19,1 | 7,6 |
| 2 | 0,189 | 0,05 | 25,7 | 19,3 | 18,2 | 17,7 | 8 |
| 3 | 0,181 | 0,05 | 25,6 | 19,5 | 13,9 | 12,5 | 13,1 |
| 4 | 0,155 | 0,05 | 25,1 | 24,1 | 18,5 | 15,2 | 9,9 |
| 5 | 0,195 | 0,05 | 26,3 | 20,9 | 15,1 | 13,6 | 12,7 |
| 6 | 0,185 | 0,05 | 26,1 | 21,1 | 19,6 | 19,1 | 7 |
| 7 | 0,150 | 0,05 | 28,4 | 23,4 | 18,3 | 18,0 | 10,4 |
| 8 | 0,191 | 0,05 | 26,6 | 20,1 | 15,9 | 14,7 | 11,9 |
| Gluconolactone | 0,125 | 0,05 | 27,0 | 20,1 | 11,6 | 10,0 | 17 |
| Na-Gluconate | 0,150 | 0,05 | 28,7 | 22,2 | 15,2 | 10,8 | 17,9 |
| V1 | 0,216 | 0,05 | 32,5 | 25,4 | 19,8 | 17,7 | 14,8 |
| V2 | 0,216 | 0,05 | 22,1 | 16,0 | 10,8 | 10,0 | 12,1 |

Table 2 includes data for the use of the polymer alone and the sugar derivative alone. Further, it includes comparative data for the use of gluconolactone and sodium gluconate as sugar derivative. As can be seen, the use of the additive of the invention results in a reduced slump loss, i.e. an improved processing profile, due to a synergistic effect between the comb polymer and the sugar derivative.

The following table 3 describes the synergistic effect of PEG-containing polymers 1 and 2 with sugar derivative 1.

Table 3

| **Polymer** | **Sugar derivative** | **Dosage Polymer [% 1)]** | **Dosage sugar derivative [% 1)]** | **Delta slump [cm]** | **1d compressive Strength [MPa]** |
|---|---|---|---|---|---|
| 1 | - | 0,223 | 0 | 15 | 38,0 |
| 1 | 1 | 0,148 | 0,1 | 3 | 36,1 |
| 1 | Sodium Gluconate | 0,148 | 0,1 (Sodium Gluconate) | 9 | 12,0 |
| 2 | - | 0,29 | 0 | 18 | 11,4 |
| 2 | 1 | 0,20 | 0,05 | 12 | 13,5 |
| 3 (comparative) | - | 0,68 | 0 | 18 | 7,2 |

(continued)

| Polymer | Sugar derivative | Dosage Polymer [% 1)] | Dosage sugar derivative [% 1)] | Deltaslump [cm] | 1d compressive Strength [MPa] |
|---|---|---|---|---|---|
| 3 (comparative) | 1 | 0,67 | 0,1 | 18 | 6,9 |
| 4 (comparative) | 1 | | Formulation not possible | | |
| 1) % solid on cement | | | | | |

The application of the additives of the invention results in a better slump retention with only slight increase or even reduced overall dosage. In case of polymer 3 (melamine-formaldehyde resins (PEG-free)), the strongly increased overall dosage did not lead to a better slump retention. A formulation of sugar derivative 1 with polynaphthalene sulfonate was not possible due to a strong gelling.

Table 4 shows the influence of the charge density and side chain length of the comb polymer 1 on the performance of the retarder. The dosage of the comb polymer was adjusted to achieve a slump flow of 26 cm and the dosage of the sugar derivative 1 was adjusted to achieve a delta slump of <7 cm +/- 1 cm after 60 min.

Table 4

| Acrylic acid [eq. per ethoxylated side chain] | Ethoxylated VOBPEG [g/mol] | Charge density | Dosage PCE [% solid on cement] | Dosage 1 [% solid on cement] | Delta slump [cm] after 60 minutes | 1d compressive strength [MPa] |
|---|---|---|---|---|---|---|
| 5 | 3000 | 1.49 | 0,12 | 0,05 | 2 | 44 |
| 5 | 3000 | 1.49 | 0.14 | | 12 | 42 |
| 3 | 3000 | 0.93 | 0,12 | 0,03 | 2 | 45 |
| 3 | 3000 | 0.93 | 0.14 | | 8 | 38 |
| 3 | 1100 | 2.46 | 0,14 | 0,1 | 1 | 51 |
| 3 | 1100 | 2.46 | 0.23 | | 10 | 37 |
| 2.5 | 1100 | 2,11 | 0.11 | 0.07 | 3 | 50 |
| 2.5 | 1100 | 2,11 | 0.15 | | 5 | 43 |
| 7 | 5800 | 1,11 | 0,05 | 0,5 | 5 | 40 |
| 7 | 5800 | 1,11 | 0.18 | | 14 | 48 |
| 5 | 5800 | 0,81 | 0,05 | 0,5 | 5 | 37 |
| 5 | 5800 | 0,81 | 0.15 | | 14 | 50 |
| 2 | 750 | 2,23 | 0,38 | 0,02 | 0 | 33 |
| 2 | 750 | 2,23 | 0,38 | | 2 | 35 |
| 2 | 500 | 3,10 | 0,42 | 0,02 | 0 | 28 |
| 2 | 500 | 3,10 | 0,42 | | 5 | 29 |

It can be seen that the best performance in terms of slump retention and early strength can be obtained when using a side chain length of 1000 g/mol to 5000 g/mol. In this range, the compressive strength increases when using a combination of comb polymer and sugar-compound. The best efficiency can be obtained using a polyethylene glycol side chain of about 3000 g/mol. Here, the dose efficiency of the retarder with respect to slump retention performance gain is highest.

It is known that the slump flow activity of comb polymers is temperature dependent and decreases with decreasing temperature. Surprisingly, it has been found that the temperature dependency of the slump flow is significantly reduced when using the additive of the invention. This is shown in figures 1 and 2 for the comb polymer 5. Whereas there is a significant temperature dependency if polymer 5 is used without any sugar derivative, there is practically no

change in the flow value if polymer 5 is used together with sugar derivative 1.

## Claims

1. An additive for construction chemical compositions comprising

a) at least one amide or ester of a sugar acid and
b) at least one water-soluble comb polymer which contains, on the main chain, acid functions and side chains having polyether moieties, wherein the polyether moieties have a number average molecular weight in the range from 1000 to 5000 g/mole.

2. The additive of claim 1, comprising an amide or ester of a sugar acid having formula (I):

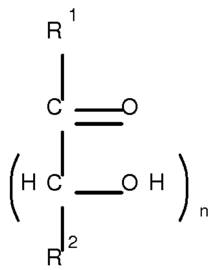

wherein

$R^1$ is $-NR^3R^4$ or $-OR^4$;
$R^2$ is $-CH_2OH$, -COOH or $-COR^1$;
$R^3$ is H, $C_1$-$C_6$-alkyl, hydroxy-$C_1$-$C_6$-alkyl or $-(AO)_x-R^5$;
$R^4$ is $-(AO)_x-R^5$, $C_1$-$C_6$-alkyl or hydroxy-$C_1$-$C_6$-alkyl;
$R^5$ is H, $C_1$-$C_{12}$-alkyl, $C_1$-$C_{12}$-alkyl substituted by $-NH_2$ or -X-CO-(CHOH)n-$R^2$;
X is -NH- or -O-;
A at each occurrence may be the same or different and is $C_mH_{2m}$;
m is 2, 3, 4, 5 or 6;
n is 2, 3, 4, or 5; and
x is 1 to 100.

3. The additive of claim 1, wherein the amide or ester of formula (I) comprises at least one group $-(AO)_x-R^5$.

4. The additive of claim 2, comprising an amide or ester of a sugar acid having formula (I), wherein $R^1$ is $-NR^3R^4$, $R^3$ is H or $C_1$-$C_6$-alkyl, and $R^4$ is $-(AO)_x-R^5$ and $R^5$ is H, $C_1$-$C_4$-alkyl or $C_1$-$C_4$-alkyl substituted by $-NH_2$.

5. The additive of any one of claims 2 to 4, comprising an amide or ester of a sugar acid having formula (I), wherein $R^2$ is $-CH_2OH$.

6. The additive of any one of claims 2 to 5, comprising an amide or ester of a sugar acid having formula (I), wherein $R^1$ is $-NR^3R^4$, n is 4, $R^2$ is $-CH_2OH$, $R^3$ is H, $R^4$ is $-(AO)_x-R^5$, and $R^5$ is H or $C_1$-$C_4$-alkyl.

7. The additive of claim 2 or 3, comprising an amide or ester of a sugar acid having formula (I), wherein $R^1$ is $-NR^3R^4$ and $R^3$ and $R^4$ are hydroxy-$C_1$-$C_6$-alkyl.

8. The additive of claim 2 or 3, comprising an amide or ester of a sugar acid having formula (I), wherein $R^1$ is-$OR^4$, $R^4$ is $-(AO)_x-R^5$ and $R^5$ is H or $C_1$-$C_{12}$-alkyl.

9. The additive of any one of the preceding claims, wherein the comb polymer comprises as units having acid functions at least one structural unit of the general formulae (Ia), (Ib), (Ic) and/or (Id):

(Ia)

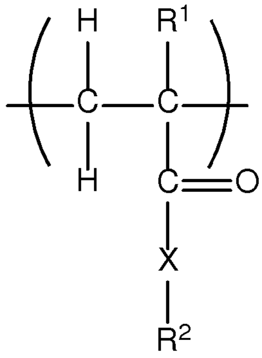

in which

$R^1$ is H or an unbranched or branched $C_1$-$C_4$ alkyl group, $CH_2COOH$ or $CH_2CO$-X-$R^2$, preferably H or $CH_3$;
X is NH-($C_nH_{2n}$), O($C_nH_{2n}$) with n = 1, 2, 3 or 4, where the nitrogen atom or the oxygen atom is bonded to the CO group, or is a chemical bond, preferably X is chemical bond or O($C_nH_{2n}$);
$R^2$ is OM, $PO_3M_2$, or O-$PO_3M_2$, with the proviso that X is a chemical bond if $R^2$ is OM;

(Ib)

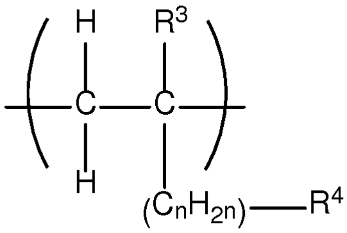

in which

$R^3$ is H or an unbranched or branched $C_1$-$C_4$ alkyl group, preferably H or $CH_3$;
n is 0, 1, 2, 3 or 4, preferably 0 or 1;
$R^4$ is $PO_3M_2$, or O-$PO_3M_2$;

(Ic)

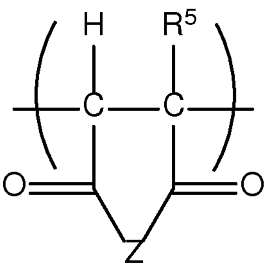

in which

$R^5$ is H or an unbranched or branched $C_1$-$C_4$ alkyl group, preferably H;
Z is O or $NR^7$, preferably O;
$R^7$ is H, ($C_nH_{2n}$)-OH, ($C_nH_{2n}$)-$PO_3M_2$, ($C_nH_{2n}$)-$OPO_3M_2$, ($C_6H_4$)-$PO_3M_2$, or ($C_6H_4$)-$OPO_3M_2$, and
n is 1, 2, 3 or 4, preferably 1, 2 or 3;

(Id)

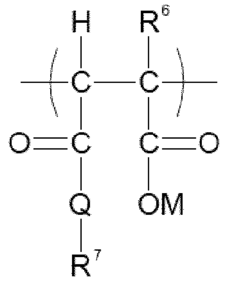

in which

$R^6$ is H or an unbranched or branched $C_1$-$C_4$ alkyl group, preferably H;
Q is $NR^7$ or O, preferably O;
$R^7$ is H, $(C_nH_{2n})$-OH, $(C_nH_{2n})$-$PO_3M_2$, $(C_nH_{2n})$-$OPO_3M_2$, $(C_6H_4)$-$PO_3M_2$, or $(C_6H_4)$-$OPO_3M_2$,
n is 1, 2, 3 or 4, preferably 1, 2 or 3; and
each M independently of any other is H or a cation equivalent.

**10.** The additive of any one of the preceding claims, wherein the comb polymer comprises as units having a side chain with polyether moieties at least one structural unit of the general formulae (IIa), (IIb), (IIc) and/or (IId):

(IIa)

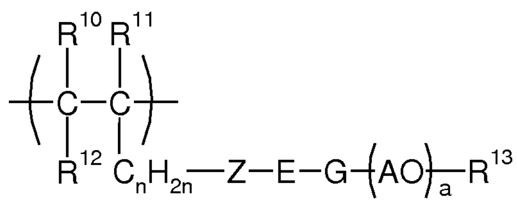

in which

$R^{10}$, $R^{11}$ and $R^{12}$ independently of one another are H or an unbranched or branched $C_1$-$C_4$ alkyl group;
Z is O or S;
E is an unbranched or branched $C_1$-$C_6$ alkylene group, a cyclohexylene group, $CH_2$-$C_6H_{10}$, 1,2-phenylene, 1,3-phenylene or 1,4-phenylene;
G is O, NH or CO-NH; or
E and G together are a chemical bond;
A is $C_xH_{2x}$ with x = 2, 3, 4 or 5, preferably 2 or 3, or is $CH_2CH(C_6H_5)$;
n is 0, 1, 2, 3, 4 or 5, preferably 0, 1 or 2;
a is selected such that the number average molecular weight of the moiety $-(AO)_a-$ is in the range from 1000 to 5000;
$R^{13}$ is H, an unbranched or branched $C_1$-$C_4$ alkyl group, CO-$NH_2$ and/or $COCH_3$;

(IIb)

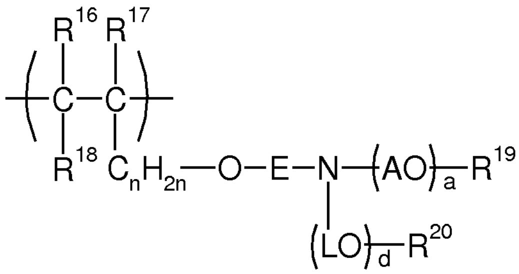

in which

$R^{16}$, $R^{17}$ and $R^{18}$ independently of one another are H or an unbranched or branched $C_1$-$C_4$ alkyl group;
E is an unbranched or branched $C_1$-$C_6$ alkylene group, a cyclohexylene group, $CH_2$-$C_6H_{10}$, 1,2-phenylene, 1,3-phenylene, or 1,4-phenylene, or is a chemical bond;
A is $C_xH_{2x}$ with x = 2, 3, 4 or 5, preferably 2 or 3, or is $CH_2CH(C_6H_5)$;
n is 0, 1, 2, 3, 4 and/or 5, preferably 0, 1 or 2;
L is $C_xH_{2x}$ with x = 2, 3, 4 or 5, preferably 2 or 3, or is $CH_2$-$CH(C_6H_5)$;
a and d are selected such that the number average molecular weight of the moieties -$(AO)_a$- and -$(LO)_d$- together are in the range from 1000 to 5000;
$R^{19}$ is H or an unbranched or branched $C_1$-$C_4$ alkyl group;
$R^{20}$ is H or an unbranched $C_1$-$C_4$ alkyl group;

(IIc)

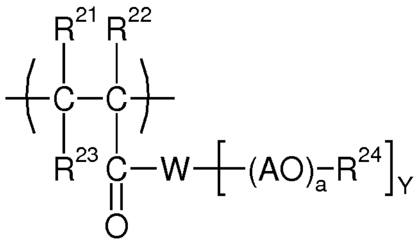

in which

$R^{21}$, $R^{22}$ and $R^{23}$ independently of one another are H or an unbranched or branched $C_1$-$C_4$ alkyl group;
W is O, $NR^{25}$, or is N;
Y is 1 ifW = O or$NR^{25}$, and is 2 if W = N;
A is $C_xH_{2x}$ with x = 2, 3, 4 or 5, preferably 2 or 3, or is $CH_2CH(C_6H_5)$;
a is selected such that the number average molecular weight of the moiety -$(AO)_a$- or both moieties -$(AO)_a$- together are in the range from 1000 to 5000;
$R^{24}$ is H or an unbranched or branched $C_1$-$C_4$ alkyl group; and
$R^{25}$ is H or an unbranched or branched $C_1$-$C_4$ alkyl group;

(IId)

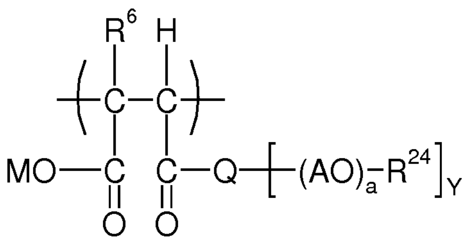

in which

$R^6$ is H or an unbranched or branched $C_1$-$C_4$ alkyl group;

Q is $NR^{10}$, N or O;
Y is 1 if W = O or $NR^{10}$ and is 2 if W = N;
$R^{10}$ is H or an unbranched or branched $C_1$-$C_4$ alkyl group; and
A is $C_xH_{2x}$ with x = 2, 3, 4 or 5, preferably 2 or 3, or is $CH_2C(C_6H_5)H$;
$R^{24}$ is H or an unbranched or branched $C_1$-$C_4$ alkyl group;
M is H or a cation equivalent; and
a is selected such that the number average molecular weight of the moiety $-(AO)_a-$ or both moieties $-(AO)_a-$ together are in the range from 1000 to 5000.

**11.** The additive of any one of the preceding claims, wherein the side chains of the comb polymer have a molecular weight in the range from 1000 to 4000.

**12.** The additive of any one of the preceding claims, wherein the weight ratio of component (a) to component (b) is in the range from 10:1 to 1:5.

**13.** The additive of any one of the preceding claims, additionally comprising a calcium silicate hydrate.

**14.** A construction chemical composition which comprises the additive of any one of claims 1 to 13 and an inorganic binder.

**15.** The construction chemical composition of claim 14, wherein the binder is an aluminate-containing cement which is preferably selected from CEM cement, in particular Portland cement and aluminate cement, in particular high alumina cement and sulfoaluminate cement, and mixtures thereof.

**16.** The construction chemical composition of claims 14 or 15, wherein the weight ratio of the inorganic binder to the additive according to claim 1 to 3 is in the range from 10 : 1 to 10000 : 1.

**17.** The use of the additive as defined in claims 1 to 13 for retarding the hardening of inorganic binder containing building material formulations and/or for producing building products, in particular for concretes such as on-site concrete, finished concrete parts, pre-cast concrete parts, concrete goods, cast concrete stones, concrete bricks, in-situ concrete, sprayed concrete (shotcrete), ready-mix concrete, air-placed concrete, concrete repair systems, industrial cement flooring, one-component and two-component sealing slurries, screeds, filling and self-levelling compositions, such as joint fillers or self-levelling underlayments, adhesives, such as building or construction adhesives, thermal insulation composite system adhesives, or tile adhesives, renders, plasters, sealants, coating and paint systems, in particular for tunnels, waste water drains, splash protection and condensate lines, screeds, mortars, such as dry mortars, sag resistant, flowable or self-levelling mortars, drainage mortars, or repair mortars, grouts, such as joint grouts, non shrink grouts, tile grouts, wind-mill grouts, anchor grouts, flowable or self-levelling grouts, ETICS (external thermal insulation composite systems), EIFS grouts (Exterior Insulation Finishing Systems, swelling explosives, waterproofing membranes, cementitious foams, or gypsum wall boards.

**Patentansprüche**

**1.** Additiv für bauchemische Zusammensetzungen, umfassend:

a) mindestens ein Amid oder einen Ester einer Zuckersäure und
b) mindestens ein wasserlösliches Kammpolymer, das an der Hauptkette Säurefunktionen enthält und an den Seitenketten Polyetherreste aufweist, wobei die Polyetherreste ein zahlenmittleres Molekulargewicht im Bereich von 1000 bis 5000 g/mol aufweisen.

**2.** Additiv nach Anspruch 1, umfassend ein Amid oder einen Ester einer die folgende Formel (I) aufweisenden Zuckersäure:

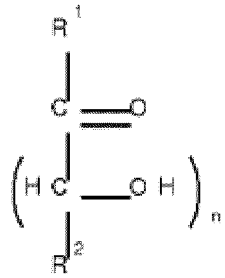

,

wobei

$R^1$ für $-NR^3R^4$ oder $-OR^4$ steht;
$R^2$ für $-CH_2OH$,-COOH oder $-COR^1$ steht;
$R^3$ für H, $C_1$-$C_6$-Alkyl, Hydroxy-$C_1$-$C_6$-alkyl oder $-(AO)_x-R^5$ steht;
$R^4$ für $-(AO)_x-R^5$, $C_1$-$C_6$-Alkyl oder Hydroxy-$C_1$-$C_6$-alkyl steht;
$R^5$ für H, $C_1$-$C_{12}$-Alkyl, mit $-NH_2$ substituiertes $C_1$-$C_{12}$-Alkyl oder $-X-CO-(CHOH)_n-R^2$ steht;
X für -NH- oder -O- steht;
A bei jedem Auftreten gleich oder voneinander verschieden sein kann und für $C_mH_{2m}$ steht;
m 2, 3, 4, 5 oder 6 ist;
n 2, 3, 4 oder 5 ist; und
x 1 bis 100 ist.

**3.** Additiv nach Anspruch 1, wobei das Amid oder der Ester der Formel (I) mindestens eine Gruppe $-(AO)_x-R^5$ umfasst.

**4.** Additiv nach Anspruch 2, umfassend ein Amid oder einen Ester einer die Formel (I) aufweisenden Zuckersäure, wobei $R^1$ für $-NR^3R^4$ steht, $R^3$ für H oder $C_1$-$C_6$-Alkyl steht und $R^4$ für $-(AO)_x-R^5$ steht und $R^5$ für H, $C_1$-$C_4$-Alkyl oder mit $-NH_2$ substituiertes $C_1$-$C_4$-Alkyl steht.

**5.** Additiv nach einem der Ansprüche 2 bis 4, umfassend ein Amid oder einen Ester einer die Formel (I) aufweisenden Zuckersäure, wobei $R^2$ für $-CH_2OH$ steht.

**6.** Additiv nach einem der Ansprüche 2 bis 5, umfassend ein Amid oder einen Ester einer die Formel (I) aufweisenden Zuckersäure, wobei $R^1$ für $-NR^3R^4$ steht, n 4 ist, $R^2$ für $-CH_2OH$ steht, $R^3$ für H steht, $R^4$ für $-(AO)_x-R^5$ steht und $R^5$ für H oder $C_1$-$C_4$-Alkyl steht.

**7.** Additiv nach Anspruch 2 oder 3, umfassend ein Amid oder einen Ester einer die Formel (I) aufweisenden Zuckersäure, wobei $R^1$ für $-NR^3R^4$ steht und $R^3$ und $R^4$ für Hydroxy-$C_1$-$C_6$-alkyl stehen.

**8.** Additiv nach Anspruch 2 oder 3, umfassend ein Amid oder einen Ester einer die Formel (I) aufweisenden Zuckersäure, wobei $R^1$ für $-OR^4$ steht, $R^4$ für $-(AO)_x-R^5$ steht und $R^5$ für H oder $C_1$-$C_{12}$-Alkyl steht.

**9.** Additiv nach einem der vorhergehenden Ansprüche, wobei das Kammpolymer als Säurefunktionen aufweisende Einheiten mindestens eine Struktureinheit der folgenden allgemeinen Formeln (Ia), (Ib), (Ic) und/oder (Id) umfasst:

(Ia)

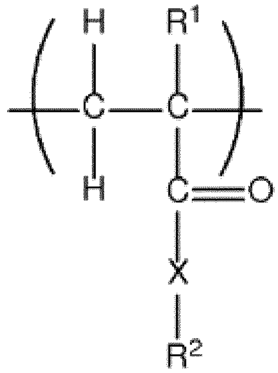

,

worin

$R^1$ für H oder eine unverzweigte oder verzweigte $C_1$-$C_4$-Alkylgruppe, $CH_2COOH$ oder $CH_2CO$-X-$R^2$, vorzugsweise H oder $CH_3$, steht;
X für NH- ($C_nH_{2n}$), O($C_nH_{2n}$) mit n = 1, 2, 3 oder 4 steht, wobei das Stickstoffatom oder das Sauerstoffatom an die CO-Gruppe gebunden ist, oder für eine chemische Bindung steht, vorzugsweise X für eine chemische Bindung oder O($C_nH_{2n}$) steht;
$R^2$ für OM, $PO_3M_2$ oder O-$PO_3M_2$ steht, mit der Maßgabe, dass X für eine chemische Bindung steht, wenn $R^2$ für OM steht;

(Ib)

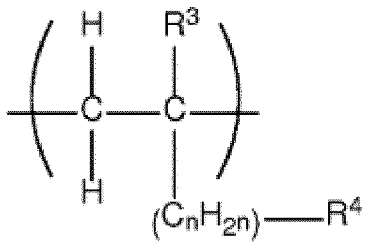

,

worin

$R^3$ für H oder eine unverzweigte oder verzweigte $C_1$-$C_4$-Alkylgruppe, vorzugsweise H oder $CH_3$, steht;
n 0, 1, 2, 3 oder 4, vorzugsweise 0 oder 1, ist;
$R^4$ für $PO_3M_2$ oder O-$PO_3M_2$ steht;

(Ic)

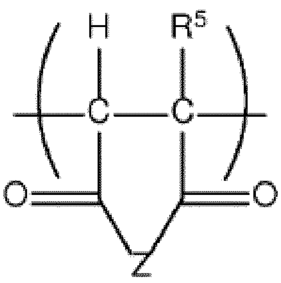

,

worin

$R^5$ für H oder eine unverzweigte oder verzweigte $C_1$-$C_4$-Alkylgruppe, vorzugsweise H, steht;
Z für O oder $NR^7$, vorzugsweise O, steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$ oder $(C_6H_4)$-$OPO_3M_2$ steht und
n 1, 2, 3 oder 4, vorzugsweise 1, 2 oder 3, ist;

(Id)

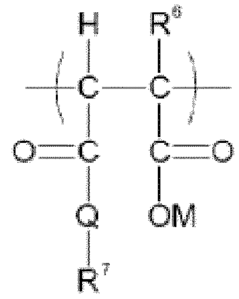

,

worin

$R^6$ für H oder eine unverzweigte oder verzweigte $C_1$-$C_4$-Alkylgruppe, vorzugsweise H, steht;
Q für $NR^7$ oder O, vorzugsweise O, steht;
$R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$ oder $(C_6H_4)$-$OPO_3M_2$ steht,
n 1, 2, 3 oder 4, vorzugsweise 1, 2 oder 3, ist; und
M jeweils unabhängig voneinander für H oder ein Kationenäquivalent steht.

**10.** Additiv nach einem der vorhergehenden Ansprüche, wobei das Kammpolymer als eine Seitenkette mit Polyetherresten aufweisende Einheiten mindestens eine Struktureinheit der folgenden allgemeinen Formeln (IIa), (IIb), (IIc) und/oder (IId) umfasst:

(IIa)

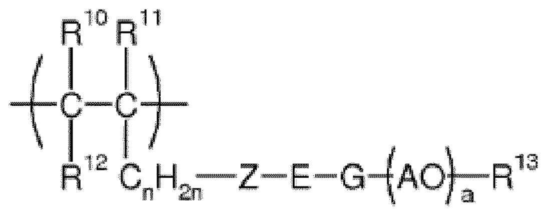

,

worin

$R^{10}$, $R^{11}$ und $R^{12}$ unabhängig voneinander für H oder eine unverzweigte oder verzweigte $C_1$-$C_4$-Alkylgruppe stehen;
Z für O oder S steht;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen oder 1,4-Phenylen steht;
G für O, NH oder CO-NH steht oder
E und G zusammen für eine chemische Bindung stehen;
A für $C_xH_{2x}$ mit x = 2, 3, 4 oder 5, vorzugsweise 2 oder 3, steht oder für $CH_2CH(C_6H_5)$ steht;
n 0, 1, 2, 3, 4 oder 5, vorzugsweise 0, 1 oder 2, ist;
a so ausgewählt ist, dass das zahlenmittlere Molekulargewicht des Rests $-(AO)_a-$ im Bereich von 1000 bis 5000 liegt;
$R^{13}$ für H, eine unverzweigte oder verzweigte $C_1$-$C_4$-Alkylgruppe, CO-$NH_2$ oder $COCH_3$ steht;

(IIb)

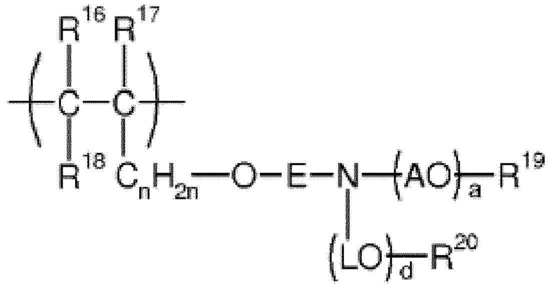

,

worin

$R^{16}$, $R^{17}$ und $R^{18}$ unabhängig voneinander für H oder eine unverzweigte oder verzweigte $C_1$-$C_4$-Alkylgruppe stehen;
E für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen oder 1,4-Phenylen steht oder für eine chemische Bindung steht;
A für $C_xH_{2x}$ mit x = 2, 3, 4 oder 5, vorzugsweise 2 oder 3, steht oder für $CH_2CH(C_6H_5)$ steht;
n 0, 1, 2, 3, 4 und/oder 5, vorzugsweise 0, 1, oder 2, ist;
L für $C_xH_{2x}$ mit x = 2, 3, 4 oder 5, vorzugsweise 2 oder 3, steht oder für $CH_2CH(C_6H_5)$ steht;
a und d so ausgewählt sind, dass das zahlenmittlere Molekulargewicht der Reste $-(AO)_a-$ und $-(LO)_d-$ zusammen im Bereich von 1000 bis 5000 liegt;
$R^{19}$ für H oder eine unverzweigte oder verzweigte $C_1$-$C_4$-Alkylgruppe steht;
$R^{20}$ für H oder eine unverzweigte $C_1$-$C_4$-Alkylgruppe steht;

(IIc)

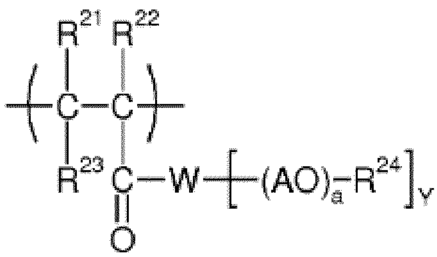

,

worin

$R^{21}$, $R^{22}$ und $R^{23}$ unabhängig voneinander für H oder eine unverzweigte oder verzweigte $C_1$-$C_4$-Alkylgruppe stehen;
W für O, $NR^{25}$ steht oder für N steht;
Y 1 ist, wenn W = O oder $NR^{25}$, und 2 ist, wenn W = N;
A für $C_xH_{2x}$ mit x = 2, 3, 4 oder 5, vorzugsweise 2 oder 3, steht oder für $CH_2CH(C_6H_5)$ steht;
a so ausgewählt ist, dass das zahlenmittlere Molekulargewicht des Rests $-(AO)_a-$ oder beider Reste - $(AO)_a-$ zusammen im Bereich von 1000 bis 5000 liegt;
$R^{24}$ für H oder eine unverzweigte oder verzweigte $C_1$-$C_4$-Alkylgruppe steht; und
$R^{25}$ für H oder eine unverzweigte oder verzweigte $C_1$-$C_4$-Alkylgruppe steht;

(IId)

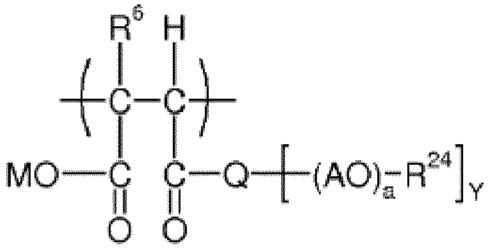

,

worin

$R^6$ für H oder eine unverzweigte oder verzweigte $C_1$-$C_4$-Alkylgruppe steht;
Q für $NR^{10}$, N oder O steht;
Y 1 ist, wenn W = O oder $NR^{10}$, und 2 ist, wenn W = N;
$R^{10}$ für H oder eine unverzweigte oder verzweigte $C_1$-$C_4$-Alkylgruppe steht; und
A für $C_xH_{2x}$ mit x = 2, 3, 4 oder 5, vorzugsweise 2 oder 3, steht oder für $CH_2CH(C_6H_5)H$ steht;
$R^{24}$ für H oder eine unverzweigte oder verzweigte $C_1$-$C_4$-Alkylgruppe steht;
M für H oder ein Kationenäquivalent steht; und
a so ausgewählt ist, dass das zahlenmittlere Molekulargewicht des Rests $-(AO)_a-$ oder beider Reste - $(AO)_a$- zusammen im Bereich von 1000 bis 5000 liegt.

**11.** Additiv nach einem der vorhergehenden Ansprüche, wobei die Seitenketten des Kammpolymers ein Molekulargewicht im Bereich von 1000 bis 4000 aufweisen.

**12.** Additiv nach einem der vorhergehenden Ansprüche, wobei das Gewichtsverhältnis von Komponente (a) zu Komponente (b) im Bereich von 10:1 bis 1:5 liegt.

**13.** Additiv nach einem der vorhergehenden Ansprüche, zusätzlich umfassend ein Calciumsilikathydrat.

**14.** Bauchemische Zusammensetzung, die das Additiv nach einem der Ansprüche 1 bis 13 und ein anorganisches Bindemittel umfasst.

**15.** Bauchemische Zusammensetzung nach Anspruch 14, wobei es sich bei dem Bindemittel um einen tonerdehaltigen Zement handelt, der vorzugsweise aus CEM-Zement, insbesondere Portlandzement und Tonerdezement, insbesondere tonerdereichem Zement und Sulfoaluminatzement und Mischungen davon ausgewählt ist.

**16.** Bauchemische Zusammensetzung nach den Ansprüchen 14 oder 15, wobei das Gewichtsverhältnis des anorganischen Bindemittels zu dem Additiv gemäß Anspruch 1 bis 3 im Bereich von 10:1 bis 10000:1 liegt.

**17.** Verwendung des wie in den Ansprüchen 1 bis 13 definierten Additivs zur Verzögerung des Abbindens von Baustoffrezepturen, die anorganisches Bindemittel enthalten, und/oder zur Herstellung von Baustofferzeugnissen, insbesondere von Beton wie Baustellenbeton, Betonfertigteilen, vorgegossenen Betonteilen, Betonwaren, Gussbetonsteinen, Betonziegeln, in-situ-Beton, Sprühbeton (Shotcrete), Fertigmischungsbeton, Spritzbeton, Betonreparatursystemen, industriellen Zementfußböden, Einkomponenten- und Zweikomponenten-Dichtungsschlämmen, Estrich, Spachtel- und Verlaufsmassen wie Fugenfüllern oder selbstverlaufenden Bodenausgleichsmassen, Klebstoffen wie Gebäude- und Bauklebstoffen, Wärmeisolation-Verbundsystemklebstoffen, oder Fliesenklebstoffe, Putzen, Putzmörtel, Dichtstoffen, Beschichtungs- und Anstrichsystemen, insbesondere für Tunnel, Abwasserleitungen, Spritzschutz- und Kondensatauskleidungen, Estrich, Mörtel wie Trockenmörtel, ablaufbeständigem, fließfähigem oder selbstverlaufendem Mörtel, Drainagemörtel und Reparaturmörtel, Einpressmörtel wie Fugenmörtel, Dichtungsschlamm, Flieseneinpressmörtel, Windradeinpressmörtel, Ankereinpressmörtel, fließfähigem oder selbstverlaufendem Einpressmörtel, ETICS (External Thermal Insulation Composite Systems, Wärmeaußenisolations-Verbundstoffsystemen), EIFS-Einpressmörtel (Exterior Insulation Finishing Systems, Außenisolationsabdecksystemen), quellenden Explosivstoffen, Wasserabdichtungsbahnen, zementhaltigen Schaumstoffen und Gipsplatten.

**Revendications**

1. Additif pour des compositions chimiques pour la construction comprenant

   a) au moins un amide ou ester d'un acide de sucre et
   b) au moins un polymère en peigne hydrosoluble qui contient, sur la chaîne principale, des fonctions de type acide et des chaînes latérales possédant des fragments de type polyéther, les fragments de type polyéther possédant un poids moléculaire moyen en nombre dans la plage de 1 000 à 5 000 g/mole.

2. Additif selon la revendication 1, comprenant un amide ou ester d'un acide de sucre possédant la formule (I) :

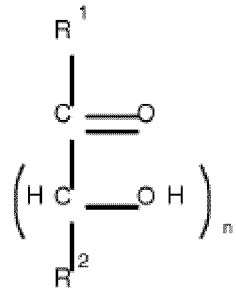

   $R^1$ étant $-NR^3R^4$ ou $-OR^4$ ;
   $R^2$ étant $-CH_2OH$, -COOH ou $-COR^1$ ;
   $R^3$ étant H, $C_{1-6}$-alkyle, hydroxy-$C_{1-6}$-alkyle ou-$(AO)_x$-$R^5$ ;
   $R^4$ étant -$(AO)_x$-$R^5$, $C_{1-6}$-alkyle ou hydroxy-$C_{1-6}$-alkyle ;
   $R^5$ étant H, $C_{1-12}$-alkyle, $C_{1-12}$-alkyle substitué par $-NH_2$ ou -X-CO-(CHOH)n-$R^2$ ;
   X étant -NH- ou -O- ;
   A en chaque occurrence pouvant être identique ou différent et étant $C_mH_{2m}$ ;
   m étant 2, 3, 4, 5 ou 6 ;
   n étant 2, 3, 4 ou 5 ; et
   x étant 1 à 100.

3. Additif selon la revendication 1, l'amide ou ester de formule (I) comprenant au moins un groupe - $(AO)_x$-$R^5$.

4. Additif selon la revendication 2, comprenant un amide ou ester d'un acide de sucre possédant la formule (I), $R^1$ étant $-NR^3R^4$, $R^3$ étant H ou $C_{1-6}$-alkyle, et $R^4$ étant -$(AO)_x$-$R^5$ et $R^5$ étant H, $C_{1-4}$-alkyle ou $C_{1-4}$-alkyle substitué par $-NH_2$.

5. Additif selon l'une quelconque des revendications 2 à 4, comprenant un amide ou ester d'un acide de sucre possédant la formule (I), $R^2$ étant $-CH_2OH$.

6. Additif selon l'une quelconque des revendications 2 à 5, comprenant un amide ou ester d'un acide de sucre possédant la formule (I), $R^1$ étant $-NR^3R^4$, n étant 4, $R^2$ étant $-CH_2OH$, $R^3$ étant H, $R^4$ étant-$(AO)_x$-$R^5$, et $R^5$ étant H ou $C_{1-4}$-alkyle.

7. Additif selon la revendication 2 ou 3, comprenant un amide ou ester d'un acide sucre possédant la formule (I), $R^1$ étant $-NR^3R^4$ et $R^3$ et $R^4$ étant hydroxy-$C_{1-6}$-alkyle.

8. Additif selon la revendication 2 ou 3, comprenant un amide ou ester d'un acide sucre possédant la formule (I), $R^1$ étant $-OR^4$, $R^4$ étant -$(AO)_x$-$R^5$ et $R^5$ étant H ou $C_{1-12}$-alkyle.

9. Additif selon l'une quelconque des revendications précédentes, le polymère en peigne comprenant, comme motifs possédant des fonctions de type acide, au moins un motif structural de formules générales (Ia), (Ib), (Ic) et/ou (Id) :

(Ia)

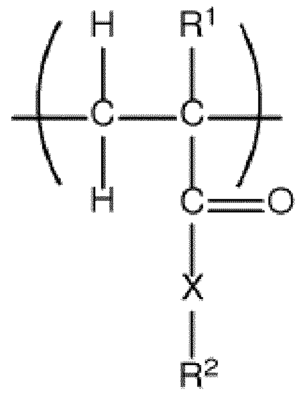

dans laquelle

$R^1$ est H ou un groupe $C_{1-4}$-alkyle non ramifié ou ramifié, $CH_2COOH$ ou $CH_2CO$-X-$R^2$, préférablement H ou $CH_3$ ;
X est NH-($C_nH_{2n}$), O($C_nH_{2n}$) avec n = 1, 2, 3 ou 4, dans lesquels l'atome d'azote ou l'atome d'oxygène est lié au groupe CO, ou est une liaison chimique, préférablement X est une liaison chimique ou O($C_nH_{2n}$);
$R^2$ est OM, $PO_3M_2$, ou O-$PO_3M_2$, étant entendu que X est une liaison chimique si $R^2$ est OM ;

(Ib)

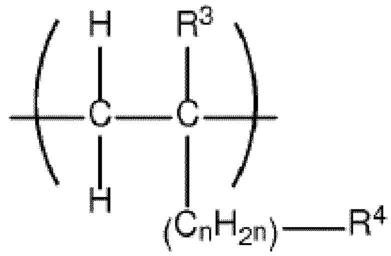

dans laquelle

$R^3$ est H ou un groupe $C_{1-4}$-alkyle non ramifié ou ramifié, préférablement H ou $CH_3$ ;
n est 0, 1, 2, 3 ou 4, préférablement 0 ou 1 ;
$R^4$ est $PO_3M_2$, ou O-$PO_3M_2$ ;

(Ic)

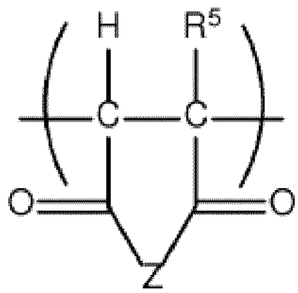

dans laquelle

$R^5$ est H ou un groupe $C_{1-4}$-alkyle non ramifié ou ramifié, préférablement H ;

Z est O ou $NR^7$, préférablement O ;
$R^7$ est H, $(C_nH_{2n})$-OH, $(C_nH_{2n})$-$PO_3M_2$, $(C_nH_{2n})$-$OPO_3M_2$, $(C_6H_4)$-$PO_3M_2$, ou $(C_6H_4)$-$OPO_3M_2$, et
n est 1, 2, 3 ou 4, préférablement 1, 2 ou 3 ;

(Id)

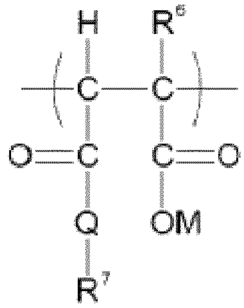

dans laquelle

$R^6$ est H ou un groupe $C_{1-4}$-alkyle non ramifié ou ramifié, préférablement H ;
Q est $NR^7$ ou O, préférablement O ;
$R^7$ est H, $(C_nH_{2n})$-OH, $(C_nH_{2n})$-$PO_3M_2$, $(C_nH_{2n})$-$OPO_3M_2$, $(C_6H_4)$-$PO_3M_2$, ou $(C_6H_4)$-$OPO_3M_2$,
n est 1, 2, 3 ou 4, préférablement 1, 2 ou 3 ; et
chaque M est, indépendamment l'un de l'autre, H ou un équivalent cation.

**10.** Additif selon l'une quelconque des revendications précédentes, le polymère en peigne comprenant, comme motifs possédant une chaîne latérale comportant des fragments de type polyéther, au moins un motif structural de formules générales (IIa), (IIb), (IIc) et/ou (IId) :

(IIa)

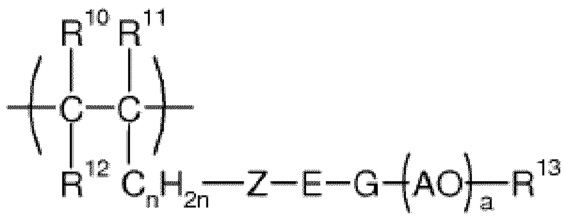

dans laquelle

$R^{10}$, $R^{11}$ et $R^{12}$, indépendamment les uns des autres, sont H ou un groupe $C_{1-4}$-alkyle non ramifié ou ramifié ;
Z est O ou S ;
E est un groupe $C_{1-6}$-alkylène non ramifié ou ramifié, un groupe cyclohexylène, $CH_2$-$C_6H_{10}$, 1,2-phénylène, 1,3-phénylène ou 1,4-phénylène ;
G est O, NH ou CO-NH ; ou
E et G ensemble sont une liaison chimique ;
A est $C_xH_{2x}$, avec x = 2, 3, 4 ou 5, préférablement 2 ou 3, ou est $CH_2CH(C_6H_5)$ ;
n est 0, 1, 2, 3, 4 ou 5, préférablement 0, 1 ou 2 ;
a est choisi de telle sorte que le poids moléculaire moyen en nombre du fragment -$(AO)_a$- soit dans la plage de 1 000 à 5 000 ;
$R^{13}$ est H, un groupe $C_{1-4}$-alkyle non ramifié ou ramifié, CO-$NH_2$ et/ou $COCH_3$ ;

(IIb)

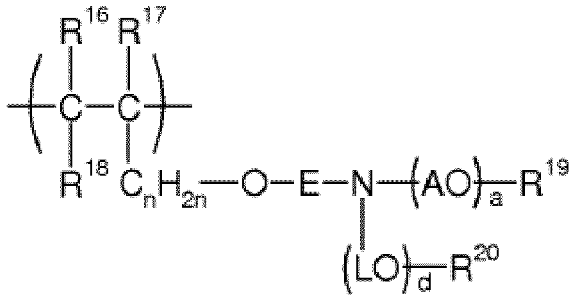

dans laquelle

$R^{16}$, $R^{17}$ et $R^{18}$, indépendamment les uns des autres, sont H ou un groupe $C_{1-4}$-alkyle non ramifié ou ramifié ;
E est un groupe $C_{1-6}$-alkylène non ramifié ou ramifié, un groupe cyclohexylène, $CH_2$-$C_6H_{10}$, 1,2-phénylène, 1,3-phénylène ou 1,4-phénylène, ou est une liaison chimique ;
A est $C_xH_{2x}$, avec x = 2, 3, 4 ou 5, préférablement 2 ou 3, ou est $CH_2CH(C_6H_5)$ ;
n est 0, 1, 2, 3, 4 et/ou 5, préférablement 0, 1 ou 2 ;
L est $C_xH_{2x}$, avec x = 2, 3, 4 ou 5, préférablement 2 ou 3, ou est $CH_2CH(C_6H_5)$ ;
a et d sont choisis de telle sorte que le poids moléculaire moyen en nombre des fragments - $(AO)_a$- et -$(LO)_d$- ensemble soit dans la plage de 1 000 à 5 000 ;
$R^{19}$ est H ou un groupe $C_{1-4}$-alkyle non ramifié ou ramifié ;
$R^{20}$ est H ou un groupe $C_{1-4}$-alkyle non ramifié.

(IIc)

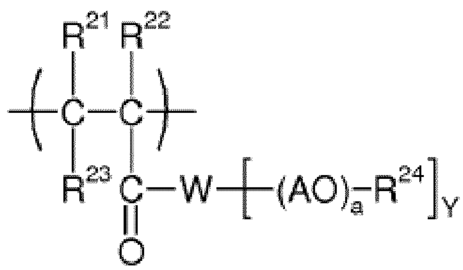

dans laquelle

$R^{21}$, $R^{22}$ et $R^{23}$, indépendamment les uns des autres, sont H ou un groupe $C_{1-4}$-alkyle non ramifié ou ramifié ;
W est O, $NR^{25}$, ou est N ;
Y est 1 si W = O ou $NR^{25}$, et est 2 si W = N ;
A est $C_xH_{2x}$, avec x = 2, 3, 4 ou 5, préférablement 2 ou 3, ou est $CH_2CH(C_6H_5)$ ;
a est choisi de telle sorte que le poids moléculaire moyen en nombre du fragment -$(AO)_a$- ou des deux fragments -$(AO)_a$- ensemble soit dans la plage de 1 000 à 5 000 ;
$R^{24}$ est H ou un groupe $C_{1-4}$-alkyle non ramifié ou ramifié ; et
$R^{25}$ est H ou un groupe $C_{1-4}$-alkyle non ramifié ou ramifié ;

(IId)

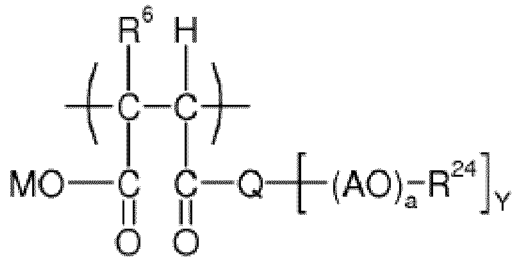

dans laquelle

$R^6$ est H ou un groupe $C_{1-4}$-alkyle non ramifié ou ramifié ;
Q est $NR^{10}$, N ou O ;
Y est 1 si W = O ou $NR^{10}$ et est 2 si W = N ;
$R^{10}$ est H ou un groupe $C_{1-4}$-alkyle non ramifié ou ramifié ; et
A est $C_xH_{2x}$, avec x = 2, 3, 4 ou 5, préférablement 2 ou 3, ou est $CH_2C(C_6H_5)$ H ;
$R^{24}$ est H ou un groupe $C_{1-4}$-alkyle non ramifié ou ramifié ;
M est H ou un équivalent cation ; et
a est choisi de telle sorte que le poids moléculaire moyen en nombre du fragment $-(AO)_a-$ ou des deux fragments $-(AO)_a-$ ensemble soit dans la plage de 1 000 à 5 000.

**11.** Additif selon l'une quelconque des revendications précédentes, les chaînes latérales du polymère en peigne possédant un poids moléculaire dans la plage de 1 000 à 4 000.

**12.** Additif selon l'une quelconque des revendications précédentes, le rapport pondéral du composant (a) sur le composant (b) étant dans la plage de 10:1 à 1:5.

**13.** Additif selon l'une quelconque des revendications précédentes, comprenant de plus un silicate de calcium hydraté.

**14.** Composition chimique pour la construction qui comprend l'additif selon l'une quelconque des revendications 1 à 13 et un liant inorganique.

**15.** Composition chimique pour la construction selon la revendication 14, le liant étant un ciment contenant un aluminate qui est préférablement choisi parmi un ciment CEM, en particulier un ciment Portland et un ciment d'aluminate, en particulier un ciment à haute teneur en alumine et un ciment de sulfoaluminate, et des mélanges correspondants.

**16.** Composition chimique pour la construction selon la revendication 14 ou 15, le rapport pondéral du liant inorganique sur l'additif selon les revendications 1 à 3 étant dans la plage de 10:1 à 10 000:1.

**17.** Utilisation de l'additif tel que défini dans les revendications 1 à 13 pour le retardement du durcissement d'un liant inorganique contenant des formulations de matériau de construction et/ou pour la production de produits de construction, en particulier pour des bétons tels que des bétons sur site, des éléments préfabriqués en béton, des éléments précoulés en béton, des produits en béton, des pierres en béton coulé, des briques de béton, du béton *in situ,* du béton projeté (béton projeté), du béton prêt à l'emploi, du béton placé à l'air, des systèmes de réparation de béton, un revêtement de sol en ciment industriel, des boues d'étanchéité à un composant et à deux composants, des chapes, des compositions de remplissage et autonivelantes, telles que des remplissages de joints ou des sous-couches autonivelantes, des adhésifs, tels que des adhésifs du bâtiment ou de la construction, des adhésifs pour système composite d'isolation thermique, ou des adhésifs pour carrelage, des crépis, des plâtres, des agents d'étanchéité, des systèmes de revêtement et de peinture, en particulier pour des tunnels, des canalisations pour eaux usées, une protection contre éclaboussement et des lignes de condensat, des chapes, des mortiers, tels que des mortiers secs, des mortiers résistants à l'affaissement, fluides ou autonivelants, des mortiers de drainage, ou des mortiers de réparation, des coulis, tels que des coulis pour joint, des coulis sans retrait, des coulis pour carrelage, des coulis pour éolienne, des coulis d'ancrage, des coulis fluides ou autonivelants, des SCITE (systèmes composites d'isolation thermique externe), des coulis SFIE (systèmes de finition d'isolation extérieure), des explosifs gonflants, des membranes d'imperméabilisation à l'eau, des mousses cimentaires, ou des panneaux muraux de gypse.

Fig. 1

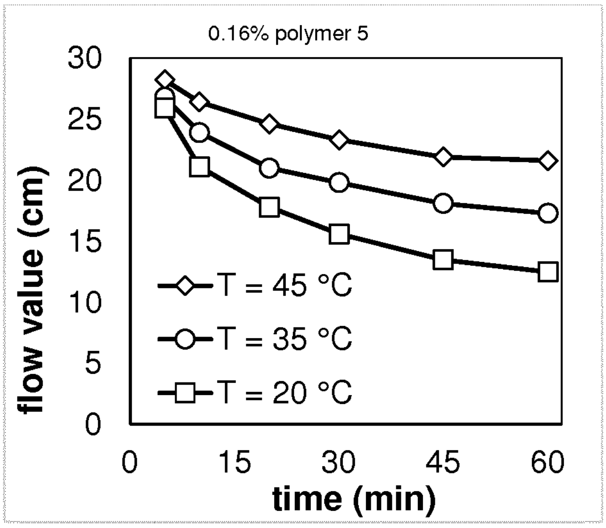
0.16% polymer 5
30
25
20
15
10
5
0
flow value (cm)
0
15
30
45
60
time (min)
T = 45 °C
T = 35 °C
T = 20 °C

Fig. 2

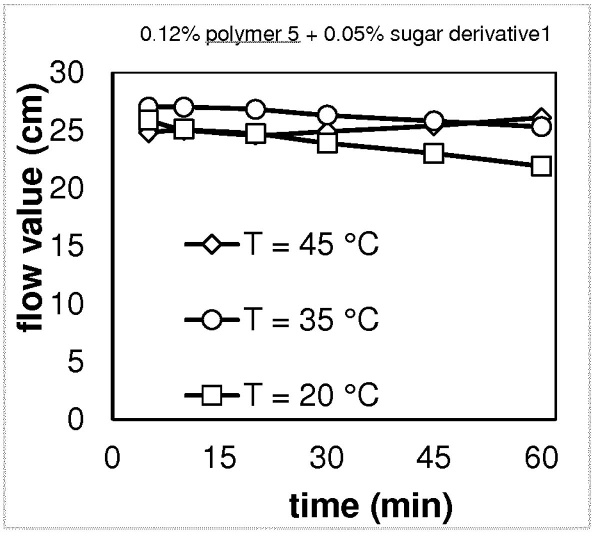
0.12% polymer 5 + 0.05% sugar derivative1
30
25
20
15
10
5
0
flow value (cm)
0
15
30
45
60
time (min)
T = 45 °C
T = 35 °C
T = 20 °C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0753488 A2
- US 5685903 A
- US 4661159 A
- US 7338990 B2
- WO 0023395 A
- WO 0044487 A
- WO 0104185 A
- WO 2010026155 A
- WO 08012438 A
- WO 2010026155 A1
- EP 14198721 A
- WO 2014114784 A
- WO 2014114782 A
- WO 15091461 A1


### Non-patent literature cited in the description


- **LAMBERET S.** *Durability of ternary binder systems based on Portland Cement, calcium aluminate cement and calcium sulfate, These École polytechnique fédérale de Lausanne EPFL, n° 3151 (2005),* 2004
- **ZURBRIGGEN, R. ; BÜHLER, E. ; LANG, J.** *Mixed-binder based self-levelling flooring compounds: Critical formulations - the reason for typical damages. 16. Ibausil Weimar,* 2006
- Lea's Chemistry of Cement and Concrete. 2007, 241-274